# EUROPEAN PATENT SPECIFICATION

(11) **EP 3 989 407 B1**
(45) Date of publication and mention of the grant of the patent: **03.09.2025**
(21) Application number: 20202796.7
(22) Date of filing: 20.10.2020
(51) Int. Cl.: H02K 3/52, H02K 5/22

(54) **ELECTRICAL MACHINE**
ELEKTRISCHE MASCHINE
MACHINE ÉLECTRIQUE

(43) Date of publication of application: 27.04.2022
(73) Proprietor: Mahle International GmbH, 70376 Stuttgart (DE)
(72) Inventor: ARCON, Ziga, 5292 Rence (SI); GOMISCEK, Matija, 5000 Nova Gorica (SI); MASERA, Sebastjan, 5292 Rence (SI); ZIBRET, Primoz, 3225 Planina pri Sevnici (SI)
(74) Representative: BRP Renaud & Partner mbB Rechtsanwälte Patentanwälte Steuerberater

(56) References cited:
- WO-A1-2019/155917
- WO-A1-2020/013078
- US-A1- 2018 241 272
- US-A1- 2019 229 577
- US-A1- 2020 014 273
- US-A1- 2020 313 501

## Description

The present invention relates to an electrical machine having a stator, which comprises at least one winding, and having a busbar device for the electrical connection of the stator to a control device.

An electrical machine generally comprises a stator having at least one winding which, in the operation of the electrical machine, is actuated by means of a control device. To this end, a busbar device having at least one pin can be employed. The pin customarily constitutes an electrical connection with the control device, and is electrically connected to a terminal of the busbar device, which is electrically connected to at least one associated winding of the stator.

In numerous applications, in particular involving the use of the electrical machine in wet and/or humid environments, it is desirable for the electrical connections of the electrical machine with the control device to be executed in a fluid-tight manner. To this end, it is conceivable for the control device, the stator and the busbar device to be arranged in a common housing. Within the housing, the busbar device can be fitted to an axial end face of the stator. Busbar devices of this type customarily comprise a carrier, which is fastened to the end face of the stator, and from which pins project on the side which is averted from the stator, in order to engage with associated receptacles in the control device, thus forming an electrical connection with the control device. In order to permit a reliable electrical connection of the respective pin with the associated receptacle and the control device, it is necessary for the busbar device and/or the control device to be manufactured with very stringent tolerances. This complicates the manufacture and assembly of the electrical machine.

US 2018/0241272 A1 shows an electric motor with a stator and a busbar device. The busbar device has a lower busbar and an upper busbar each with a carrier. The lower busbar is axially attached to the stator and the carrier of the upper busbar is attached to a housing of the electric motor.

US 2020/0014273 A1 relates to an electric motor with a stator. The motor comprises and a first support member and an axially neighbouring second support member. Both support members rest on the stator.

The object addressed by the present invention is therefore the disclosure of an improved, or at least an alternative, form of embodiment of an electrical machine of the above-mentioned type, which is in particular characterized by simplified manufacture and/or simplified assembly, with a reliable electrical connection between the busbar device and the control device.

According to the invention, this object is fulfilled by the subject matter of the independent claim 1. Advantageous forms of embodiment are the subject matter of the dependent claims.

The present invention is based upon the general concept whereby a carrier of a busbar device of an electrical machine which is arranged on an end face of a stator is only attached to the stator at an attachment section. Conversely, a connector section of the carrier is detached, in particular loose, from the stator, wherein a connector of the busbar device is arranged on the connector section, for the constitution of an electrical connection with a control device of the electrical machine. Accordingly, notwithstanding the attachment of the carrier to the stator, a relative movement of the connector vis-à-vis the stator is possible, by means of the connector section of the carrier. As a result of the potential relative movement of the at connector vis-à-vis the stator, the connector, upon connection with the control device, in particular upon the insertion thereof with an associated counter connector in the control device, is mobile or movable, thereby permitting a simplified assembly of the electrical machine. Moreover, in this manner, both the busbar device and the control device can be manufactured with greater tolerances, such that the manufacture of the electrical machine is simplified. Moreover, the relative mobility of the connector vis-à-vis the stator permits the reliable maintenance of the electrical connection of the pin with the control device, notwithstanding the permissible tolerances and the simplification of assembly.

In accordance with the concept of the invention, the electrical machine comprises the stator. The stator comprises at least one winding, and extends, in particular in a hollow cylindrical shape, in an axial direction, and runs in a circumferential direction. The electrical machine further comprises the busbar device, the function of which is the electrical connection of the at least one winding of the stator to the control device of the electrical machine. The busbar device comprises the carrier and the connector. The function of the connector of the busbar device is the constitution of an electrical connection with the control device. In particular, the connector is in insertion with an associated counter connector of the control device. The carrier of the busbar device is arranged on an axial end face of the stator, and extends both radially and in a circumferential direction. According to the invention, the carrier comprises an attachment section and a connector section. The connector section, in a first direction which runs transversely to the axial direction, is joined to the attachment section. The attachment section is thus attached to the stator. Conversely, the connector section is detached from the stator. The connector is arranged on the connector section. In particular the connector is mechanically fitted to the connector section.

The connector preferably projects on the side of the connector section which is averted from the stator.

The control device is appropriately arranged on the side of the connector which is averted from the stator.

The connector or the counter connector is appropriately a male connector with at least one projecting pin. Consequently the other connector is a female connector with a corresponding receptacle for each pin. The female connector is hence in particular a socket. It is thus possible for the electrical connection between the busbar device and the control device to be formed in a simple and reliable manner by means of a plug-in connection.

Preferably the connector of the busbar device is a male connector with at least one pin. The counter connector of the control device is thus a female connector, which, for the respective at least one pin, advantageously comprises an associated receptacle, in which the associated pin is accommodated, and in particular is inserted, in order to constitute an electrical connection with the control device.

The electrical machine appropriately comprises a housing, in which the stator, the busbar device and the control device are accommodated, and is advantageously fluidically sealed, and in particular closed, vis-à-vis the exterior.

The housing of the electrical machine preferably comprises an inner wall, which is advantageously oriented radially in a circumferential direction, and which separates a first chamber, in which the stator is arranged, from a second chamber, in which the control device is arranged. The carrier is appropriately arranged in the first chamber. The inner wall appropriately incorporates a passage, through which the connector is fed.

The electrical machine appropriately comprises a rotor, which is advantageously arranged within the stator, and which cooperates with the stator in a known manner.

In each case, the directions indicated herein refer in particular to the axial direction, which can correspond to an axis of the rotor. The radial direction, or the term "radial", thus means transverse to the axial direction. The circumferential direction runs about the axial direction.

The electrical machine can be any desired electrical machine. In particular, the electrical machine can be of a type which is employed in humid and/or wet environments.

The electrical machine can in particular be an electrical machine of a temperature-control device and/or an air-conditioning installation. In particular, the electrical machine is a compressor of an air-conditioning installation. In electrical machines of this type, which are employed in humid or wet environments, electrical connections are sealed vis-à-vis the humid and/or wet environment. At the same time, a reliable electrical connection of the busbar device to the control device simplifies the assembly and manufacture of the electrical machine.

Advantageously and appropriately, the carrier is electrically insulating. In particular, this means that the carrier, in the operation of the electrical machine, does not constitute any electrical connection between the connector, in particular between the at least one pin, and the respective winding and/or between the connector, in particular between the at least one pin, and the control device.

In preferred forms of embodiment, the connector section of the carrier is formed of a flexible, in particular of an elastic substance or material. Forms of embodiment are preferred, in which the connector section is formed of a flexible, in particular of an elastic, plastic. The flexibility of the connector section *per* se is such that a greater relative movement of the connector vis-à-vis the stator and vis-à-vis the control device is possible. Consequently, in the manufacture of the busbar device, the stator, the control device and the housing, greater tolerances are possible. This therefore results in a further simplification of the manufacture and assembly of the electrical device.

It is conceivable for the entire carrier to be manufactured from plastic. The carrier can thus be provided in a simple and cost-effective manner.

The carrier is preferably manufactured by a moulding method, in particular by an injection-moulding method. The carrier is thus advantageously an injection-moulded part, in particular an injection-moulded plastic part.

In preferred forms of embodiment, the connector section comprises at least one axially open recess. The recess extends transversely to the axial direction, and with a transverse or inclined orientation to the first direction. As a result of the recess, the connector section thus incorporates localized thinning, and is axially open. In consequence, the connector section is movable relative to the attachment section in a more effective and damage-free manner. Accordingly, relative movements of the connector section to the attachment section about a pivoting axis which runs along the recess and/or relative movements of the connector section to the attachment section about a radially-oriented axis of rotation are possible. A recess of this type thus functions in the manner of an articulated joint, about which the connector section is movable relative to the attachment section. This, in turn, results in a further simplification of the manufacture and assembly of the electrical machine, forming a reliable electrical connection with the control device.

The attachment section advantageously incorporates no such recesses, and is thus free of recesses.

In principle, the respective recess can be axially open on one side only.

Forms of embodiment are preferred in which at least one of the at least one recesses is axially open on both sides. This means that the recess is axially open on the side facing the stator, and on the side which is averted from the stator. The recess thus comprises two axially-open openings, also described hereinafter as recess openings, averted from one another. The connector section is appropriately thinned between the two recess openings. A recess of this type permits a simplified relative movement of the connector section about the associated pivoting axis and/or about the axis of rotation, in both pivoting directions. The manufacture and assembly of the electrical machine are further simplified accordingly.

In principle, the at least one respective recess can extend over any desired lower section of the connector section.

Forms of embodiment are preferred in which at least one of the at least one recesses, advantageously the respective recess, extends over the entire connector section. This means that at least one of the at least one recesses extends, transversely to the axial direction and with a transverse or inclined orientation to the first direction, over the entire connector section. This results in the improved mobility of the connector section relative to the attachment section, with a consequent simplification of the manufacture and assembly of the electrical machine.

In principle, the connector section can comprise only one such recess.

Forms of embodiment are also conceivable in which the connector section comprises two or more such recesses, which are spaced from one another in the first direction.

The connector section advantageously extends beyond the at least one pin. This means that the connector section occupies a larger region of the carrier than the region in which the at least one pin is arranged.

The connector section advantageously extends, in the circumferential direction, over at least 90°, and preferably over at least 100°, wherein an extension over at least 120° is particularly preferred. Advantageously, the connector section further extends, in the circumferential direction, over less than 260°, and preferably over less than 200°. In particular, the connector section extends between 90° and 180° in the circumferential direction.

The respective pin can be arranged, as required, relative to the attachment section, and mechanically fitted to the connector section.

Forms of embodiment are advantageous in which the connector, in particular at least one of the pins, advantageously the respective pin, is arranged in opposition to the attachment section, in the first direction. As this is the region of the maximum relative mobility of the connector section vis-à-vis the attachment section, such an arrangement of the at connector results in the maximum mobility of the connector relative to the stator. In this manner, the manufacture and assembly of the electrical device is simplified accordingly. In particular, the connector, in particular the at least one pin, is arranged in distal and/or diagonal opposition to the attachment section.

Forms of embodiment are preferred in which the connector comprises a jacket having an opening which opens on the side which is averted from the stator, also described hereinafter as the jacket opening. The jacket opening of the connector is at least partially closed by at least one seal. The seal encloses at least one pin in the jacket, in particular in the jacket opening. The pin, which projects from the jacket opening, is thus at least partially enclosed by the seal in the region of the jacket opening. The seal permits the execution of a sealing function by the connector, to the exterior of the at least one pin.

Analogously, the counter connector of the control device can comprises a jacket having an opening which opens on the side facing the stator. If the counter connector is the male connector having at least one pin, the opening of the counter connector is preferably at least partially closed by at least one seal. The seal encloses at least one pin in the jacket, in particular in the opening. The pin, which projects from the opening, is thus at least partially enclosed by the seal in the region of the opening. The seal permits the execution of a sealing function by the counter connector, to the exterior of the at least one pin.

Forms of embodiment are preferred in which the connector, by means of a corresponding connection, in particular by means of at least one screw connection, is mechanically loaded in the direction of the control device. This means that, upon the assembly of the electrical machine, a corresponding connection, for example at least one screw connection, mechanically loads the connector in the direction of the control device. Accordingly, the seal is also loaded and pressurized in the direction of the control device. A simple and reliable seal is produced as a result.

The connection which loads the connector in the direction of the control device can in particular comprise at least one screw connection. The at least one screw connection can be configured as required. In particular, it is conceivable for the connector to incorporate a bushing, through which an associated screw is fed and mechanically loads the connector in the direction of the control device.

According to preferred forms of embodiment, the connector is axially spaced from the stator. In particular, on the side of the connector which faces the stator, a projecting limit stop is provided, which prevents any direct contact of the connector, in particular the at least one pin, with the stator, in particular with the at least one winding.

Forms of embodiment are preferred in which the busbar device, for at least one electrical connection of the connection to the control device, in particular for at least one of the at least one pins of the connector, comprises a respectively associated terminal, which is spaced from the connector and projects from the carrier. By means of the respective terminal, an electrical connection is constituted with an associated mating terminal of the stator, for the electrical connection of the stator, in particular the respective winding, to the control device via the busbar device. The busbar device, for the respective electrical connection of the connection to the control device, in for the respective pin of the connector, and the associated terminal, comprises an associated electrical conductor, which electrically connects the associated electrical connection of the connection to the control device, in particular the associated pin to the associated terminal. The conductor is arranged within the carrier, and is enclosed by the carrier. The respective conductor is thus routed within the carrier. In particular, the respective conductor is encapsulated in the carrier. This permits the simple and cost-effective production of the busbar device, and the reliable mutual electrical isolation of the various pins, terminals and conductors.

The respective conductor is preferably configured with a flat profile. In particular, the respective conductor is configured with a flat profile at least in the connector section. For example, at least one of the at least one conductors is a plate or a plate-like structure. As a result, the conductor, upon the relative movement of the connector section vis-à-vis the attachment section, can be moved in a simple and non-destructive manner, such that an electrical connection between the connector, in particular the pin, and the terminal, and thus between the control device and the at least one winding, continues to be reliably maintained.

The respective terminal of the busbar device can be arranged as desired.

Forms of embodiment are advantageous in which at least one of the at least one terminals, preferably the respective terminal, projects from the attachment section. In particular, the at least one terminal projects radially from the attachment section.

A simple electrical connection is thus possible between the respective terminal and the associated mating terminal of the stator.

**In** principle, the mail connector, that is the connector or the counter connector, can comprise only one such pin.

Forms of embodiment are preferred in which the male connector, n particular the connector of the busbar device, comprises at least two, and in particular three such pins. One terminal and one conductor are advantageously assigned to the respective pin.

Forms of embodiment are preferred in which the terminals assume a distributed arrangement in the circumferential direction. A clear separation of the terminals is thus provided and, consequently, a simplified assembly of the electrical machine.

In principle, the attachment of the attachment section to the stator can be executed as desired.

Forms of embodiment are preferred in which the attachment section comprises at least two connection means, which are mutually spaced in the circumferential direction, each of which cooperates with an associated mating connection means of the stator, in order to constitute a mechanical connection between the attachment section and the stator, and thus to attach the attachment section to the stator. This means that the stator, for the respective connection means, comprises an associated mating connection means which, in combination with the associated connection means, constitutes a mechanical connection.

Both form-fitted and materially bonded connections with the respective connection means and the associated mating connection means are conceivable. In particular, the respective connection means and the associated mating connection means can be adhesively bonded, welded, soldered or screwed together, or can constitute an adhesive bond, a welded connection, a soldered connection or a screw connection. Naturally, combinations of these connections are also possible.

The terminals and the associated mating terminals are advantageously arranged in the circumferential direction between the connection means and the mating connection means. The manufacture and assembly of the electrical machine are simplified accordingly.

The carrier preferably assumes a flat design in the axial direction. This means that the carrier is preferably configured to a disc-shaped or annular shape. In particular, the carrier is a disc ring, which can be configured in annular segments. The flat design of the carrier results in a simplified relative movement of the connector section vis-à-vis the attachment section.

Further significant characteristics and advantages of the invention proceed from the sub-claims, the drawings and the associated description of the figures, with reference to the drawings.

It is understood that the above-mentioned characteristics, and those to be described hereinafter, are not only applicable in the respective combination indicated, but also in other combinations, or in isolation, without departing from the scope of the present invention, which is defined by the appended claims.

Preferred exemplary embodiments of the invention are represented in the drawings and described in greater detail in the following description, wherein identical reference numbers identify identical, similar or functionally equivalent components.

In the figures, schematically in each case:
- Fig. 1: shows a highly simplified, schematic-type representation of an air-conditioning installation having an electrical machine,
- Fig. 2: shows a section through the electrical machine having a stator and a busbar device,
- Fig. 3: shows an isometric view of the electrical machine, in an exploded representation,
- Fig. 4: shows an isometric view of the electrical machine,
- Fig. 5: shows a first side view of the busbar device,
- Fig. 6: shows a second side view of the busbar device,
- Fig. 7: shows an overhead view of the busbar device,
- Fig. 8: shows an isometric, partially transparent representation of the busbar device,
- Fig. 9: shows an isometric interior view of the electrical machine.

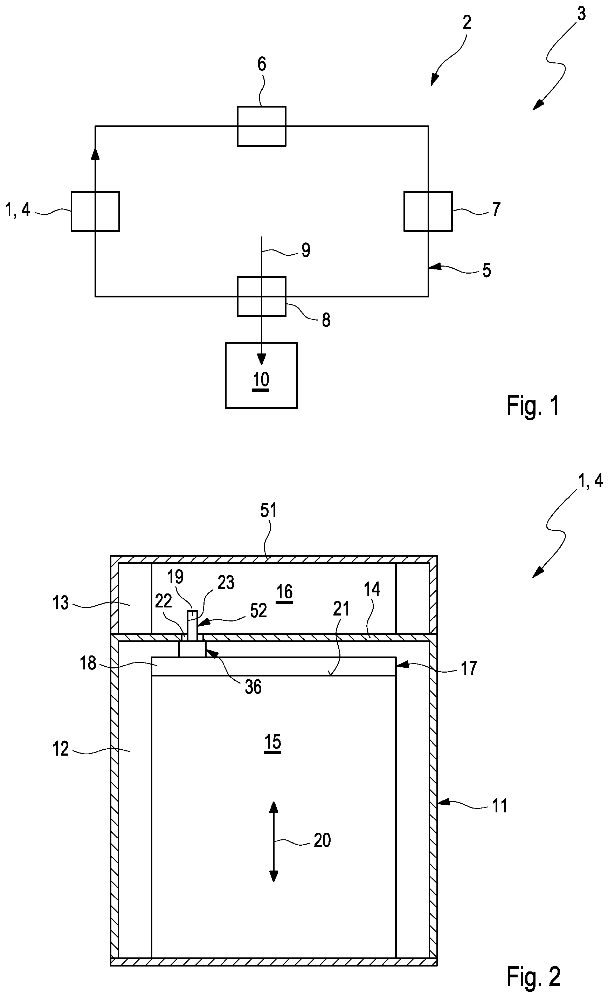

An electrical machine 1, as represented in figures 1 to 9, can be a constituent of an air-conditioning installation 2, in particular in a motor vehicle 3. The electrical machine 1 can be a compressor 4 for the compression of a coolant in a circuit 5 of the air-conditioning installation 2. In the circuit 5, in addition to the electrical machine 1, a condenser 6 for the condensation of the coolant, an expander 7 for the expansion of the coolant, and a vaporizer 8 for the vaporization of the coolant can be incorporated. An air flux 9 indicated in Figure 1, which is fluidically isolated from the coolant, can flow through the vaporizer 8, and can flow thereafter into an interior space 10, for the purposes of cooling.

Figure 2 shows a simplified section through the electrical machine 1. The electrical machine 1 accordingly comprises a housing 11 which, in the exemplary embodiment represented, delimits a first chamber 12 and a second chamber 13. Within the housing 11, the chambers 12, 13 are mutually separated by an inner wall 14. In the first chamber 12, a stator 15 of the electrical machine 1 and an unrepresented rotor, which cooperates with the stator 15, are arranged. In the second chamber 13, a control device 16 is arranged, by means of which the stator 15 is electrically supplied and controlled in service. The electrical machine 11 further comprises a busbar device 17, which comprises a carrier 18 and a connector 36 for electrical connection with the control device 16. The connector 36 engaged with a corresponding connector 52 of the control device 16, also referred to a counter connector 52 in the following. In the shown exemplary embodiment, the connector 36 comprises at least one electrically conductive pin 19. The counter connector 52, for each pin 19, comprises a corresponding receptacle 23. The carrier 18 is arranged, in an axial direction 20, on an outer end face 21 of the stator 15, and in the first chamber 12. The inner wall 14 incorporates a passage 22, through which the at least one pin 19 is fed into the second chamber 13, is inserted in the corresponding receptacle 23 in the control device 16, and is thus electrically connected to the control device 16.

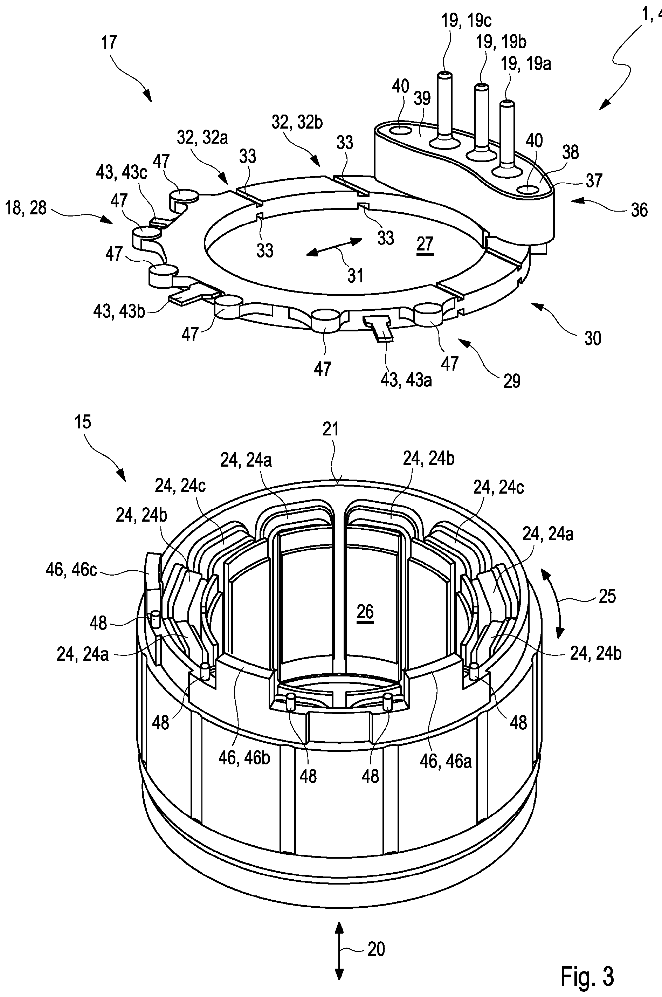

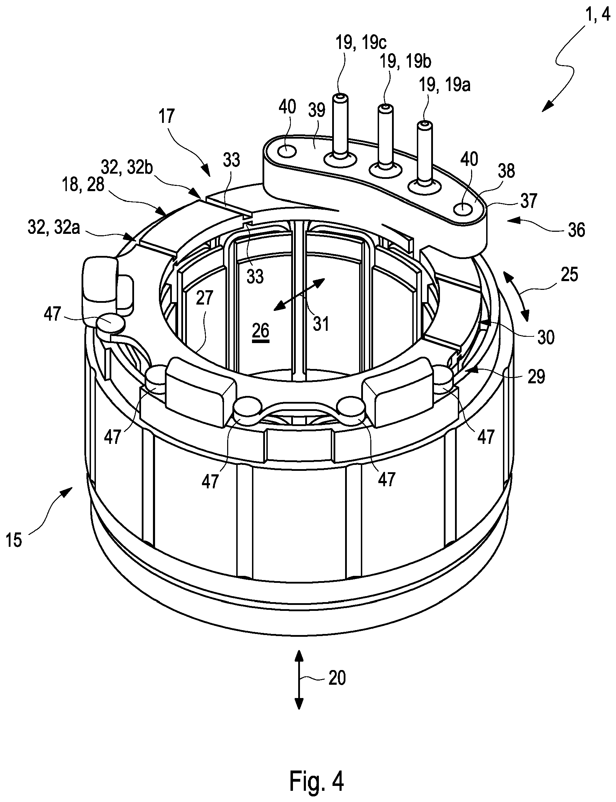

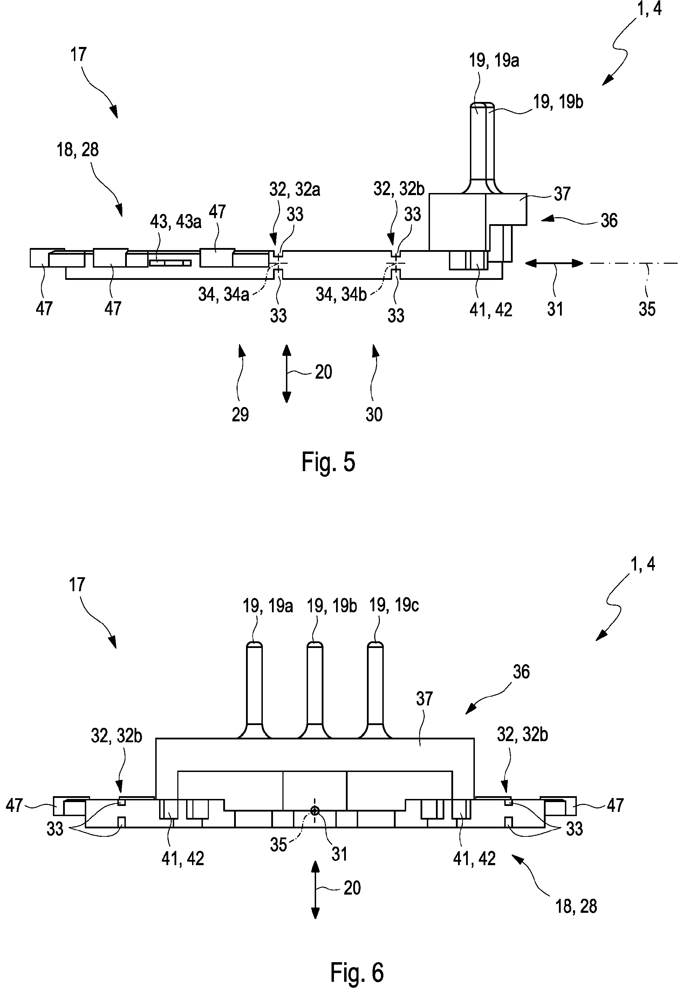

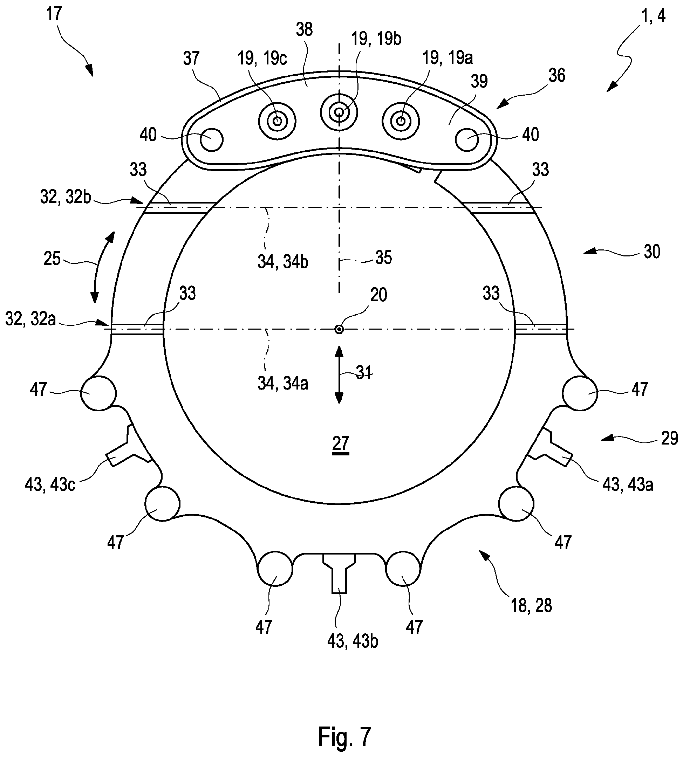

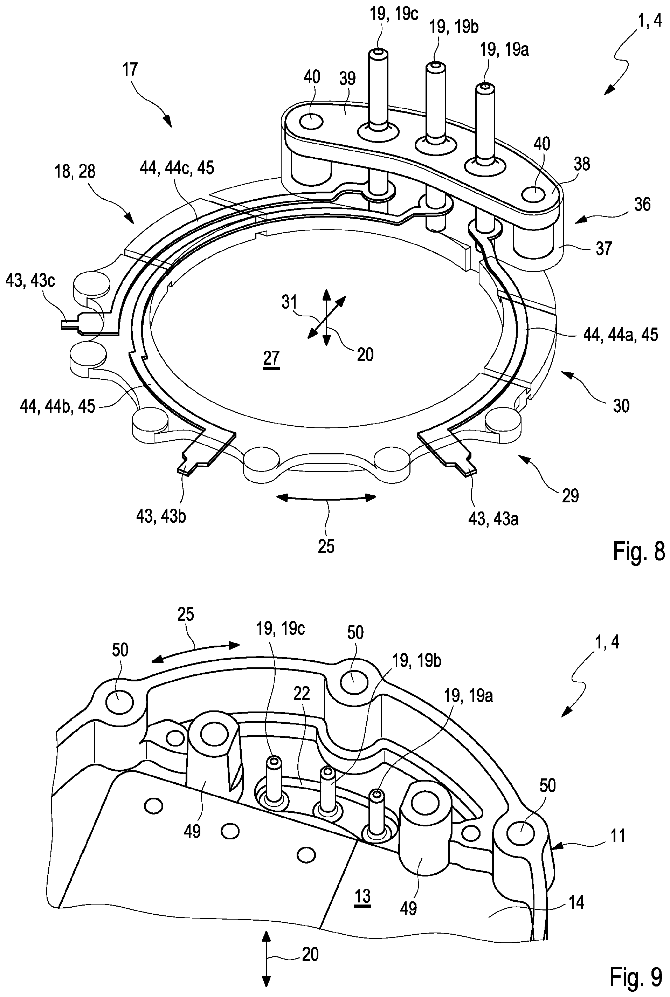

Figures 3 and 4 respectively show an isometric view of the stator 15 and the busbar device 17, wherein Figure 3 shows an exploded representation. Figures 5 and 6 show different side views, and Figure 7 shows an overhead view of the busbar device 17. Figure 8 shows an isometric view of the busbar device, in which the carrier 18 is represented as transparent. Figure 9 shows an isometric interior view of the electrical machine 1, in the region of the second chamber 13 and on the inner wall 14.

According to the figures, the stator 15 comprises at least one winding 24. In the exemplary embodiment represented, the stator 15 comprises a total of three different windings 24, each of which corresponds to one phase, and arranged one after another in a circumferential direction 25. The circumferential direction 25 is considered in relation to the axial direction 20, and is thus oriented about the axial direction 20. The stator 15 represented thus comprises first windings 24a, second windings 24b and third windings 24c. The first windings 24a, the second windings 24b and the third windings 24c are respectively electrically interconnected. The first windings 24a, the second windings 24b and the third windings 24c can each be differentially actuated by the control device 16. By means of the windings 24, the stator 15, in service, generates an alternating magnetic field, which induces a rotation of the rotor. In an alternative variant, the rotor, in service, might generate a field in the windings 24, which can be tapped off by the control device in the form of an electric voltage.

As can in particular be seen from Figure 3, the stator 15 assumes a hollow cylindrical shape, and thus extends in a circumferential direction 25 and in an axial direction 20. The carrier 18 of the busbar device 17 extends transversely to the axial direction 20, and thus extends both radially and in the circumferential direction 25. In the exemplary embodiments represented, the carrier 18 is configured in the shape of a disc ring, and incorporates a central opening 27 which is aligned with the hollow space 26 of the stator 15, also described hereinafter as the carrier opening 27. The carrier 18 is preferably formed of a plastic, for example by injection-moulding. Accordingly, the carrier 18 is in particular an injection-moulded plastic part 28. The carrier 18 comprises an attachment section 29 and a connector section 30 joined to the attachment section 29 (c.f. in particular Figure 7). The attachment section 29 is attached to the stator 15 whereas, conversely, the connector section 30 is detached from the stator 15. The connector 36 of the busbar device 17 is arranged on the connector section 30, in particular mechanically fitted to the connector section 30, and projects from the connector section 30 on the side which is averted from the stator 15.

As can in particular be seen from Figure 7, the connector section 30, in a direction 31 which runs transversely to the axial direction 20, also described hereinafter as the first direction 31, connects to the attachment section 29. Moreover, the connector section 30 also connects to the attachment section 29 in the circumferential direction 25, on both sides. The carrier 18 is configured with a flat profile, and thus, in the axial direction 20, comprises an extension which corresponds to a maximum of 1/10^{th} or 10% of the radial extension of the carrier 18. In the exemplary embodiment represented, the attachment section 29 extends over 180° in the circumferential direction 25. The same applies, correspondingly, to the connector section 30, which extends over 180° in the circumferential direction 25. Accordingly, the connector section 30 and the attachment section 29 respectively comprise one half of the carrier 18 in the circumferential direction 25.

The connector section 30 can comprise at least one axially open recess 32, which runs transversely to the axial direction 20, and with an inclined or transverse orientation to the first direction 31, in the examples represented, transversely to the first direction 31. The carrier illustrated 18 comprises two such recesses 32, which are spaced from one another transversely to the axial direction 20, and with an inclined or transverse orientation to the first direction 31, in the exemplary embodiment represented, transversely to the first direction 31. The respective recess 32 in the exemplary embodiment illustrated extends transversely to the axial direction 20, and transversely to the first direction 31, over the entire connector section 30. The respective recess 32 in the exemplary embodiment illustrated, as can be seen, for example, in Figure 5, is axially open on both sides. This means that the respective recess 32 comprises two axially open openings 33, also described hereinafter as recess openings 33, which are averted from one another and between which the connector section 30 is recessed or thinned. The respective recess 32 thus functions in the manner of an articulated joint, which permits a pivoting of the connector section 30 relative to the attachment section 29 about a pivoting axis 34 which runs through the respective recess 32. In the exemplary embodiment represented, a first of the recesses 32a runs perpendicularly to the axial direction 20, and thus intersects with the axial direction 20. The other, or second recess 32b is arranged in the first direction 31, on the side of the first recess 32a which is averted from the attachment section 29, and with a spacing to the latter. A first pivoting axis 34a is thus oriented through the first recess 32a and intersects with the axial direction 20. A second pivoting axis 34b is arranged on the side of the first pivoting axis 34a which is averted from the attachment section 29, and with a spacing to the latter. As a result of the annular or annular segmental configuration of the connector section 30, it is further possible for the connector section 30 to be rotated, relative to the attachment section 29, about a radial axis of rotation 35, which is in particular oriented along the first direction 31. It is thus possible for the connector 36, in particular the at least one pin 19, to be connected to the control device 16 in a simplified manner, and in particular to be inserted in the receptacle 23, such that the manufacture and assembly of the electrical machine 1 is simplified. Moreover, the movement of the connector 36, in particular the at least one pin 19, relative to the stator 15 and relative to the control device 16 thus permitted allows the busbar device 17 and/or the stator 15 and/or the control device 16 to be manufactured with greater tolerances.

In the exemplary embodiment represented, the connector 36 of busbar device 17 comprises an associated pin 19 for the respective winding 24. This means that the connector 36 comprises a first pin 19a for the first windings 24a, a second pin 19b for the second windings 24b, which is electrically isolated from the first pin 19a, and a third pin 19c for the third windings 24c, which is electrically isolated from the first pin 19a and from the second pin 19b. The connector 36 and thus the respective pin 19 is spaced in a first direction 31 vis-à-vis the attachment section 29, and is in particular arranged opposite the attachment section 29 in said first direction 31.

In the exemplary embodiment represented, the connector 36 is spaced from the stator. The pins 19 are accommodated in the connector 36, and project from the connector 36 on the side which is averted from the stator 15. The connector 36 comprises a jacket 37 which, in Figure 8, is represented as transparent. The jacket 37 is open on the side which is averted from the stator 15, and thus comprises a jacket opening 38. The pins 19 project from the jacket opening 38, and are enclosed by a seal 39 which closes the jacket opening 38. The connector 36 of the exemplary embodiment represented further comprises two ducts 40, through each of which an unrepresented screw can be fed, in order to mechanically load and pressurize the connector 36 in the direction of the control device 16, in particular in the direction of the receptacle 23. The pins 19 are arranged between the ducts 40. Two hard stops 41 are arranged on the side of the connector 36 facing the stator 15. The hard stops 41 are two part. Each of the hard stops 41 can be arranged coaxial to one of the ducts 40 and can comprise an inner thread 42. The hard stops 41 prevent any direct electrical connection of the respective pin 19 with the stator 15, in particular with the windings 24.

For each pin 19, the busbar device 17 further comprises, for the electrical connection of the respective pin 19 to the associated windings 24, an associated terminal 43, which is spaced from the pin 19. In the exemplary embodiment represented, the terminals 43 are arranged on the attachment section 29, and project radially outwards from the attachment section 29. This means that the busbar device 17 comprises an associated first terminal 43a for the first pin 19a, an associated second terminal 43b for the second pin 19b, and an associated third terminal 43c for the third pin 19c. In each case, the terminals 43 are electrically isolated from one another by the carrier 18. The respective terminal 43 is electrically connected to the associated pin 19 by means of an associated electrical conductor 44. This means that a first conductor 44a electrically connects the first pin 19a to the first terminal 43a, a second conductor 44b electrically connects the second pin 19b to the second terminal 43b, and a third conductor 44c electrically connects the third pin 19c to the third terminal 43c. In the exemplary embodiment represented, the respective conductor 44 is configured with a flat profile, in particular as a plate 45. The conductors 44 are respectively arranged within the carrier 18, are enclosed by said carrier 18 and are electrically isolated from one another. In the exemplary embodiment represented, the respective terminal 43 is integrally configured with the associated conductor 44, in particular by the reshaping of an outwardly projecting end of the conductor 45. The terminals 43 are arranged with a mutual spacing in the circumferential direction 25.

As can in particular be seen from Figure 3, the stator 15, for each terminal 43, comprises an associated mating terminal 46, which is electrically connected to the associated terminal 43, in order to electrically connect the latter, and thus the associated pin 19, to the associated windings 24. The stator thus comprises an associated first mating terminal 46a for the first terminal 43a, an associated second mating terminal 46b for the second terminal 43b, and an associated third mating terminal 46c for the third terminal 43c, wherein the mating terminals 46, in a corresponding manner to the terminals 43, are mutually spaced in the circumferential direction 25. The first mating terminal 46a is electrically connected to the first windings 24a, the second mating terminal 46b is electrically connected to the second windings 24b, and the third mating terminal 46c is electrically connected to the third windings 24c.

In the exemplary embodiment represented, the attachment of the attachment section 29 to the stator 15 is executed by means of connection means 47 of the attachment section 29, each of which, by means of an associated mating connection means 48 of the stator 15, constitutes a mechanical connection. In the exemplary embodiment represented, the connection means 47 project radially outwards from the attachment section 29, and are mutually spaced in the circumferential direction 25. The terminals 43 are thus arranged in the circumferential direction 25 between the connection means 47. Accordingly, the mating connection means 48 are also arranged with a mutual spacing in the circumferential direction 25, wherein the mating terminals 46 are arranged in the circumferential direction 25 between the mating connection means 48. The mechanical connection between the respective connection means 47 and the associated mating connection means 48 can be executed in any manner desired. Adhesive bonding, welding, soldering, screwing or similar are in particular conceivable.

As can be seen from Figure 9, two collars 49 projecting into the second chamber 13 are provided adjacent to the passage 22, wherein the respective collar 49 is aligned with one of the bushings 40. An unrepresented screw, which is fed through the respective collar 49 and the associated bushing 40, thus mechanically loads the connector 36 in the direction of the inner wall 14 and the control device 16. This results in a simple and reliable assembly of the electrical machine 1, and in particular in a stable electrical connection of the respective pins 19 with the control device 16. In this manner, moreover, the seal 39 is loaded and pressurized against the inner wall 14 and the control device 16, such that a reliable seal is achieved.

As can further be seen from Figure 9, a number of screw openings 50 can be provided, distributed radially on the outer side of the second chamber 13 and in the circumferential direction 25, through each of which an unrepresented screw can be fed such that, further to the connection of the control device 16 with the respective pin 19, the second chamber 13 is closed by a cover 51 (see Figure 2) of the housing 11 which is arranged opposite the inner wall 14.

## Claims

1. Electrical machine (1), in particular an electrical compressor (4),
- having a stator (15), which comprises at least one winding (24),
- wherein the stator (15) extends in an axial direction (20) and runs in a circumferential direction (25),
- having a busbar device (17) comprising at least one electrical conductor (44) for the electrical connection of the at least one winding (24) to a control device (16),
- wherein the busbar device (17) comprises a carrier (18) encapsulating the at least one electrical conductor (44) and a connector (36) which is electrically connected to the control device (16),
- wherein the carrier (18) is arranged on an axial end face (21) of the stator (15),
- wherein the carrier (18) extends radially and in a circumferential direction (25),
- wherein the carrier (18) comprises an attachment section (29) and a connector section (30) which is joined to the attachment section (29) in a first direction (31) which runs transversely to the axial direction (20),
- wherein the attachment section (29) is attached to the stator (15),
- wherein the connector section (30) is detached from the stator (15) and the connector (36) is arranged on the connector section (30), **characterized in that** the connector (36) is relatively movable vis-à-vis the stator (15) by means of the connector section (30).

2. Electrical machine according to Claim 1,
**characterized in that**
the connector section (30) comprises at least one groove (32), which extends transversely to the axial direction (20) and with a transverse or inclined orientation to the first direction (31).

3. Electrical machine according to Claim 2,
**characterized in that**
one of the at least one grooves (32) is axially open on the side facing the stator (15) and one of the at least one grooves (32) is axially open on the side which is averted from the stator (15), such that the grooves (32) oppose each other in the axial direction (20).

4. Electrical machine according to Claim 2 or 3,
**characterized in that**
at least one of the at least one grooves (32) extends, transversely to the axial direction (20) and with a transverse or inclined orientation to the first direction (31), over the entire connector section (30).

5. Electrical machine according to any of Claims 2 to 4,
**characterized in that**
the connector section (30) comprises at least two grooves (32) which are spaced from one another in the first direction (31).

6. Electrical machine according to any of Claims 1 to 5,
**characterized in that**
the connector (36) projects from the side of the attachment section (30) which is averted from the stator (15).

7. Electrical machine according to any of Claims 1 to 6,
**characterized in that**
the connector (36) comprises at least one pin (19) which projects from the side of the connector section (30) averted from the stator (15), wherein at least one pins (19) is arranged opposite the attachment section (29) in the first direction (31).

8. Electrical machine according to Claim 7,
**characterized in that**
- the connector (36) comprises a jacket (37) having a jacket opening (38) which opens on the side which is averted from the stator (15),
- the connector (36) comprises a seal (39) which at least partially closes the jacket opening (38),
- at least one of the at least one pins (19) is enclosed by the seal (39) in the jacket opening (38).

9. Electrical machine according to any of Claims 1 to 8,
**characterized in that**
the connector (36) is mechanically loaded in the direction of the control device (16).

10. Electrical machine according to any of Claims 1 to 9,
**characterized in that**
the connector (36) is axially spaced from the stator (15).

11. Electrical machine according to any of Claims 7 to 10,
**characterized in that**
- the busbar device (17), for at least one of the at least one pins (19), comprises an associated terminal (43), which is spaced from the pin (19) and projects from the carrier (18),
- the respective terminal (43) is electrically connected to an associated mating terminal (46) of the stator (15),
- the busbar device (17), for the respective pin (19) and the associated terminal (43) comprises an associated electrical conductor (44), which electrically connects the pin (19) to the associated terminal (43) and is enclosed by the carrier (18).

12. Electrical machine according to Claim 11,
**characterized in that**
at least one of the at least one terminals (43) projects from the attachment section (29).

13. Electrical machine according to any of Claims 1 to 12,
**characterized in that**
- the attachment section (29) comprises at least two connection means (47), which are spaced from one another in the circumferential direction (25),
- the stator (15), for the respective connection means (47), comprises an associated mating connection means (48) which, in combination with the associated connection means (47), constitutes a mechanical connection.

14. Electrical machine according to any of Claims 1 to 13,
**characterized in that**
the carrier (18) has an annular shape.

15. Electrical machine according to any of Claims 1 to 14,
**characterized in that**
the connector section (30) extends over at least 90° in the circumferential direction (25).

## Patentansprüche

1. Elektrische Maschine (1), insbesondere ein elektrischer Kompressor (4),
- die einen Stator (15) aufweist, der mindestens eine Wicklung (24) umfasst,
- wobei sich der Stator (15) in einer Axialrichtung (20) erstreckt und in einer Umfangsrichtung (25) verläuft,
- die eine Sammelschienenvorrichtung (17) aufweist, die mindestens einen elektrischen Leiter (44) für die elektrische Verbindung der mindestens einen Wicklung (24) mit einer Steuervorrichtung (16) umfasst,
- wobei die Sammelschienenvorrichtung (17) einen Träger (18), der den mindestens einen elektrischen Leiter (44) verkapselt, und einen Verbinder (36) umfasst, der elektrisch mit der Steuervorrichtung (16) verbunden ist,
- wobei der Träger (18) an einer axialen Stirnfläche (21) des Stators (15) angeordnet ist,
- wobei sich der Träger (18) radial und in einer Umfangsrichtung (25) erstreckt,
- wobei der Träger (18) einen Befestigungsabschnitt (29) und einen Verbinderabschnitt (30) umfasst, der mit dem Befestigungsabschnitt (29) in einer ersten Richtung (31), die quer zur Axialrichtung (20) verläuft, zusammengefügt ist,
- wobei der Befestigungsabschnitt (29) am Stator (15) befestigt ist,
- wobei der Verbinderabschnitt (30) vom Stator (15) gelöst ist und der Verbinder (36) am Verbinderabschnitt (30) angeordnet ist, **dadurch gekennzeichnet, dass** der Verbinder (36) mittels des Verbinderabschnitts (30) relativ gegenüber dem Stator (15) beweglich ist.

2. Elektrische Maschine nach Anspruch 1,
**dadurch gekennzeichnet, dass**
der Verbinderabschnitt (30) mindestens eine Nut (32) umfasst, die sich quer zur Axialrichtung (20) und mit einer querverlaufenden oder geneigten Ausrichtung zur ersten Richtung (31) erstreckt.

3. Elektrische Maschine nach Anspruch 2,
**dadurch gekennzeichnet, dass**
eine der mindestens einen Nuten (32) auf der Seite, die dem Stator (15) zugewandt ist, axial offen ist, und eine der mindestens einen Nuten (32) auf der Seite, die vom Stator (15) abgewandt ist, axial offen ist, derart, dass die Nuten (32) einander in der Axialrichtung (20) gegenüberliegen.

4. Elektrische Maschine nach Anspruch 2 oder 3,
**dadurch gekennzeichnet, dass**
sich mindestens eine der mindestens einen Nut (32) quer zur Axialrichtung (20) und mit einer querverlaufenden oder geneigten Ausrichtung zur ersten Richtung (31) über den gesamten Verbinderabschnitt (30) erstreckt.

5. Elektrische Maschine nach einem der Ansprüche 2 bis 4,
**dadurch gekennzeichnet, dass**
der Verbinderabschnitt (30) mindestens zwei Nuten (32) umfasst, die in der ersten Richtung (31) voneinander beabstandet sind.

6. Elektrische Maschine nach einem der Ansprüche 1 bis 5,
**dadurch gekennzeichnet, dass**
der Verbinder (36) von der Seite des Befestigungsabschnitts (30), die vom Stator (15) abgewandt ist, vorspringt.

7. Elektrische Maschine nach einem der Ansprüche 1 bis 6,
**dadurch gekennzeichnet, dass**
der Verbinder (36) mindestens einen Stift (19) umfasst, der von der Seite des Verbinderabschnitts (30), die vom Stator (15) abgewandt ist, vorspringt, wobei mindestens ein Stift (19) in der ersten Richtung (31) dem Befestigungsabschnitt (29) gegenüberliegend angeordnet ist.

8. Elektrische Maschine nach Anspruch 7,
**dadurch gekennzeichnet, dass**
- der Verbinder (36) einen Mantel (37) umfasst, der eine Mantelöffnung (38) aufweist, die sich auf der Seite, die vom Stator (15) abgewandt ist, öffnet,
- der Verbinder (36) eine Dichtung (39) umfasst, die die Mantelöffnung (38) mindestens teilweise verschließt,
- mindestens einer der mindestens einen Stifte (19) durch die Dichtung (39) in der Mantelöffnung (38) umschlossen ist.

9. Elektrische Maschine nach einem der Ansprüche 1 bis 8,
**dadurch gekennzeichnet, dass**
der Verbinder (36) in der Richtung der Steuervorrichtung (16) mechanisch belastet wird.

10. Elektrische Maschine nach einem der Ansprüche 1 bis 9,
**dadurch gekennzeichnet, dass**
der Verbinder (36) axial vom Stator (15) beabstandet ist.

11. Elektrische Maschine nach einem der Ansprüche 7 bis 10,
**dadurch gekennzeichnet, dass**
- die Sammelschienenvorrichtung (17) für mindestens einen der mindestens einen Stifte (19) einen zugeordneten Anschluss (43) umfasst, der vom Stift (19) beabstandet ist und vom Träger (18) vorspringt,
- der jeweilige Anschluss (43) elektrisch mit einem zugehörigen Gegenanschluss (46) des Stators (15) verbunden ist,
- die Sammelschienenvorrichtung (17) für den jeweiligen Stift (19) und den zugeordneten Anschluss (43) einen zugeordneten elektrischen Leiter (44) umfasst, der den Stift (19) elektrisch mit dem zugeordneten Anschluss (43) verbindet und vom Träger (18) umschlossen ist.

12. Elektrische Maschine nach Anspruch 11,
**dadurch gekennzeichnet, dass**
mindestens einer der mindestens einen Anschlüsse (43) vom Befestigungsabschnitt (29) vorspringt.

13. Elektrische Maschine nach einem der Ansprüche 1 bis 12,
**dadurch gekennzeichnet, dass**
- der Befestigungsabschnitt (29) mindestens zwei Verbindungsmittel (47) umfasst, die in der Umfangsrichtung (25) voneinander beabstandet sind,
- der Stator (15) für das jeweilige Verbindungsmittel (47) ein zugeordnetes Gegenverbindungsmittel (48) umfasst, das in Kombination mit dem zugeordneten Verbindungsmittel (47) eine mechanische Verbindung bildet.

14. Elektrische Maschine nach einem der Ansprüche 1 bis 13,
**dadurch gekennzeichnet, dass**
der Träger (18) eine Ringform aufweist.

15. Elektrische Maschine nach einem der Ansprüche 1 bis 14,
**dadurch gekennzeichnet, dass**
der Verbinderabschnitt (30) sich in der Umfangsrichtung (25) über mindestens 90° erstreckt.

## Revendications

1. Machine électrique (1), en particulier compresseur électrique (4),
- présentant un stator (15), qui comprend au moins un enroulement (24),
- dans laquelle le stator (15) s'étend dans une direction axiale (20) et dans une direction circonférentielle (25),
- présentant un dispositif de barres omnibus (17) comprenant au moins un conducteur électrique (44) pour la connexion électrique du au moins un enroulement (24) à un dispositif de commande (16),
- dans laquelle le dispositif de barres omnibus (17) comprend un support (18) encapsulant le au moins un conducteur électrique (44) et un connecteur (36) qui est connecté électriquement au dispositif de commande (16),
- dans laquelle le support (18) est agencé sur une face d'extrémité axiale (21) du stator (15),
- dans laquelle le support (18) s'étend radialement et dans une direction circonférentielle (25),
- dans laquelle le support (18) comprend une section de fixation (29) et une section de connecteur (30) qui est jointe à la section de fixation (29) dans une première direction (31) qui s'étend transversalement à la direction axiale (20),
- dans laquelle la section de fixation (29) est fixée au stator (15),
- dans laquelle la section de connecteur (30) est détachée du stator (15) et le connecteur (36) est agencé sur la section de connecteur (30), **caractérisée en ce que** le connecteur (36) est relativement mobile par rapport au stator (15) au moyen de la section de connecteur (30).

2. Machine électrique selon la revendication 1,
**caractérisée en ce que**
la section de connecteur (30) comprend au moins une rainure (32), qui s'étend transversalement à la direction axiale (20) et avec une orientation transversale ou inclinée par rapport à la première direction (31).

3. Machine électrique selon la revendication 2,
**caractérisée en ce que**
une de la au moins une rainure (32) est ouverte axialement sur le côté orienté vers le stator (15) et une de la au moins une rainure (32) est ouverte axialement sur le côté opposé au stator (15), de telle sorte que les rainures (32) s'opposent l'une à l'autre dans la direction axiale (20).

4. Machine électrique selon la revendication 2 ou 3,
**caractérisée en ce que**
au moins une de la au moins une rainure (32) s'étend, transversalement à la direction axiale (20) et avec une orientation transversale ou inclinée par rapport à la première direction (31), sur toute la section de connecteur 30).

5. Machine électrique selon l'une quelconque des revendications 2 à 4,
**caractérisée en ce que**
la section de connecteur (30) comprend au moins deux rainures (32) qui sont espacées l'une de l'autre dans la première direction (31).

6. Machine électrique selon l'une quelconque des revendications 1 à 5,
**caractérisée en ce que**
le connecteur (36) fait saillie du côté de la section de fixation (30) qui est opposé au stator (15).

7. Machine électrique selon l'une quelconque des revendications 1 à 6,
**caractérisée en ce que**
le connecteur (36) comprend au moins une broche (19) qui fait saillie du côté de la section de connecteur (30) opposé au stator (15), dans laquelle au moins une broche (19) est agencée en face de la section de fixation (29) dans la première direction (31).

8. Machine électrique selon la revendication 7,
**caractérisée en ce que**
- le connecteur (36) comprend une gaine (37) présentant une ouverture de gaine (38) qui s'ouvre du côté opposé au stator (15),
- le connecteur (36) comprend un joint (39) qui ferme au moins partiellement l'ouverture de gaine (38),
- au moins une de la au moins une broche (19) est entourée par le joint (39) dans l'ouverture de gaine (38).

9. Machine électrique selon l'une quelconque des revendications 1 à 8,
**caractérisée en ce que**
le connecteur (36) est sollicité mécaniquement en direction du dispositif de commande (16).

10. Machine électrique selon l'une quelconque des revendications 1 à 9,
**caractérisée en ce que**
le connecteur (36) est espacé axialement du stator (15).

11. Machine électrique selon l'une quelconque des revendications 7 à 10,
**caractérisée en ce que**
- le dispositif de barres omnibus (17), pour au moins une de la au moins une broche (19), comprend une borne associée (43), qui est espacée de la broche (19) et fait saillie à partir du support (18),
- la borne (43) respective est connectée électriquement à une borne d'accouplement (46) associée du stator (15),
- le dispositif de barres omnibus (17), pour la broche (19) respective et la borne (43) associée comprend un conducteur électrique (44) associé, qui connecte électriquement la broche (19) à la borne (43) associée et est entouré par le support (18).

12. Machine électrique selon la revendication 11,
**caractérisée en ce que**
au moins une de la au moins une borne (43) fait saillie à partir de la section de fixation (29).

13. Machine électrique selon l'une quelconque des revendications 1 à 12,
**caractérisée en ce que**
- la section de fixation (29) comprend au moins deux moyens de connexion (47), qui sont espacés l'un de l'autre dans la direction circonférentielle (25),
- le stator (15), pour le moyen de connexion (47) respectif, comprend un moyen de connexion d'accouplement (48) associé qui, en combinaison avec le moyen de connexion (47) associé, constitue une connexion mécanique.

14. Machine électrique selon l'une quelconque des revendications 1 à 13,
**caractérisée en ce que**
le support (18) présente une forme annulaire.

15. Machine électrique selon l'une quelconque des revendications 1 à 14,
**caractérisée en ce que**
la section de connecteur (30) s'étend sur au moins 90° dans la direction circonférentielle (25).
